Europäisches Patentamt

(19) European Patent Office

Office européen des brevets

(11) Numéro de publication: **0 131 530**
**B1**

# (12) FASCICULE DE BREVET EUROPEEN

(45) Date de publication du fascicule du brevet:
**16.09.87**

(51) Int. Cl.⁴: **A 01 D 78/10**, A 01 B 73/00

(21) Numéro de dépôt: **84440022.6**

(22) Date de dépôt: **25.05.84**

(54) **Perfectionnement aux machines de fenaison en vue de leur transport.**

(30) Priorité: **07.07.83 FR 8311485**

(43) Date de publication de la demande:
**16.01.85 Bulletin 85/3**

(45) Mention de la délivrance du brevet:
**16.09.87 Bulletin 87/38**

(84) Etats contractants désignés:
**DE FR GB NL**

(56) Documents cités:
**DE - B - 1 180 981**
**DE - B - 1 215 991**
**FR - A - 2 342 014**
**GB - A - 2 078 481**
**US - A - 2 869 305**

**POWER FARMING, vol. 43, no. 6, décembre 1969,**
**Agricultural Press, Londres (GB), "In the field with a**
**powered harrow", pages 65-67**
**DREIPUNKT-TURBOHEUER TH4DN, 19-26 mai 1967,**
**Fellawerke GmbH, Feucht (DE)**

(73) Titulaire: **KUHN S.A., 4, Impasse des Fabriques,**
**F-67700 Saverne (FR)**

(72) Inventeur: **Urlacher, Jean-Pierre, 32, Rue Clémenceau,**
**F-67700 Saverne (FR)**
Inventeur: **Lang, Denis, 7, Rue de Monswiller Ottersthal,**
**F-67700 Saverne (FR)**

(74) Mandataire: **Andres, Jean-Claude, KUHN S.A. 4, Impasse**
**des Fabriques, F-67700 Saverne (FR)**

ACTORUM AG

**Description**

La présente invention se rapporte aux machines de fenaison comportant notamment un châssis portant plusieurs rotors placés côte à côte et déplaçant des végétaux se trouvant sur le sol, un timon qui est articulé autour d'un axe par rapport audit châssis et qui sert pour l'accouplement à un tracteur et, un support escamotable relié au châssis et muni de roues qui portent la machine dans la position de transport et qui sont dégagées du sol dans la position de travail.

Sur une machine de ce genre décrite dans la demande de brevet DE-C-1.215.991, la transposition de la position de transport dans la position de travail nécessite de nombreuses opérations. Il faut en effet:

– décrocher du tracteur le timon servant à tirer la machine au transport, le déverrouiller et le fixer dans des supports prévus sur le châssis,

– raccourcir l'un des supports des roues pour le transport, de manière à amener les roues servant au travail en contact avec le sol,

– déplacer ledit support de roue autour d'un axe d'articulation jusqu'à ce qu'il arrive pratiquement dans une position horizontale,

– mettre en place la chape d'attelage et l'accrocher au tracteur,

– démonter la roue de transport et la fixer sur le timon servant au transport et,

– pivoter le support de la deuxième roue servant au transport vers le haut dans une position sensiblement verticale.

Pour passer de la position de travail dans la position de transport, les mêmes opérations doivent être effectuées dans l'ordre contraire. Toutes ces opérations sont longues et fastidieuses à réaliser.

La machine à travailler la terre décrite dans la demande de brevet FR-A-2.342.014 comporte un châssis muni d'une barre d'attelage oscillante pendant le travail et rigide pendant le transport. A ce châssis est également relié un essieu avec des roues abaissables pour le transport et relevables pour le travail. Le blocage et le déblocage de la barre d'attelage par rapport au châssis sont combinés avec le réglage de la position des roues.

Sur cette machine, la position entre la barre d'attelage et le châssis ne varie pas lorsqu'on passe de la position de travail dans la position de transport. L'agencement décrit ne permet donc pas de réduire la largeur de la machine pour le transport.

La présente invention a notamment pour but de faciliter la transposition de la machine de la position de travail dans la position de transport dans laquelle la largeur de la machine est réduite par rapport à la position de travail, et vice versa.

A cet effet, une caractéristique de l'invention consiste en ce que la machine comporte un vérin hydraulique relié au support escamotable des roues et au timon, lequel vérin hydraulique déplace simultanément le châssis autour de l'axe d'articulation avec le timon et le support escamotable avec les roues par rapport audit châssis. Le vérin hydraulique peut être relié directement au support escamotable et/ou au timon ou bien au moyen de pièces intermédiaires.

Cet agencement ne nécessite ni le décrochage de la machine du tracteur, ni le démontage, respectivement le remontage de pièces pour passer d'une position dans l'autre. Toutes les manœuvres nécessaires pour changer la position de la machine sont ainsi réalisées en un minimum de temps et sans efforts de la part de l'opérateur.

D'autres caractéristiques et avantages de l'invention ressortiront de la description ci-après, avec référence aux dessins annexés, qui représentent à titre d'exemples non limitatifs deux formes de réalisation de l'invention.

Dans ces dessins:

– La figure 1 représente une vue de dessus de la machine selon l'invention en position de travail,

– La figure 2 représente, à plus grande échelle, une coupe suivant le plan II-II de la figure 1,

– La figure 3 représente une vue de dessus de la machine en position de transport,

– La figure 4 représente une vue de côté de la machine en position de transport,

– La figure 5 représente, à plus grande échelle, une vue de dessus du dispositif de verrouillage du support des roues de transport,

– La figure 6 représente une vue de côté du dispositif suivant la figure 5,

– La figure 7 représente, à plus grande échelle, une vue de dessus du dispositif de verrouillage entre le châssis et le timon,

– La figure 8 représente une vue de côté du dispositif suivant la figure 7,

– La figure 9 représente une vue de côté d'un autre exemple de réalisation,

– La figure 10 représente, à plus grande échelle, une coupe partielle au niveau de l'articulation du support muni des roues de transport,

– La figure 11 représente, à plus grande échelle et avec une coupe partielle, une vue de dessus de l'articulation entre le timon et le châssis de la machine,

– La figure 12 représente une coupe suivant le plan XII-XII de la figure 11,

– La figure 13 représente schématiquement la position de l'axe d'articulation du timon.

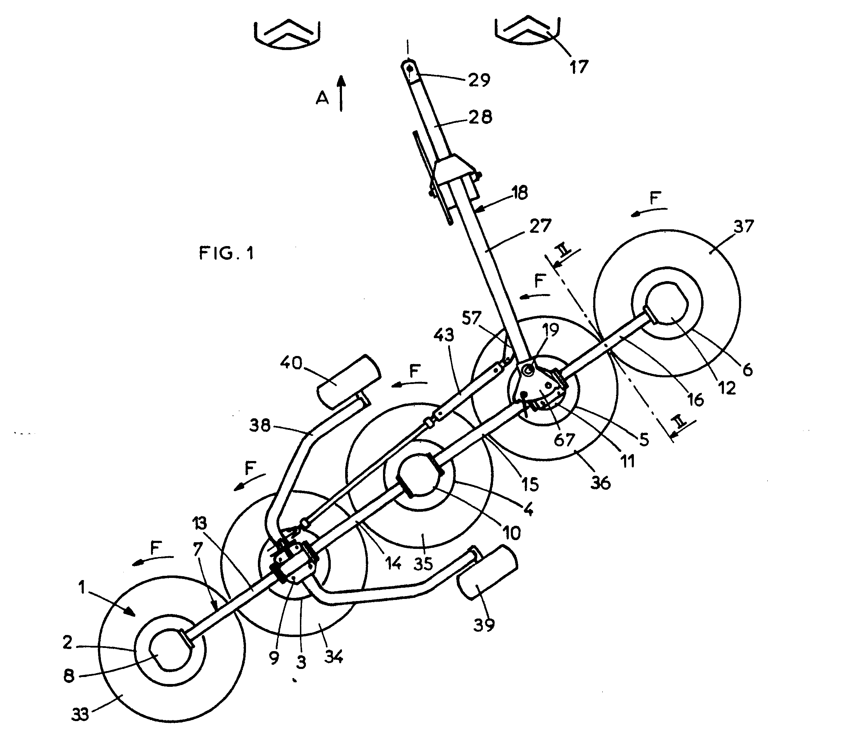

Telle qu'elle est représentée sur les figures 1 à 4, la machine selon l'invention comporte cinq rotors (1) constitués par des tambours (2 à 6) reliés entre eux au moyen d'un châssis (7). Ce châssis est constitué par cinq carters (8 à 12) surmontant chacun un tambour (2 à 6) et quatre tubes (13 à 16) reliant lesdits carters entre eux.

Ce châssis (7) est relié à un tracteur d'entraînement (17) au moyen d'un timon (18).

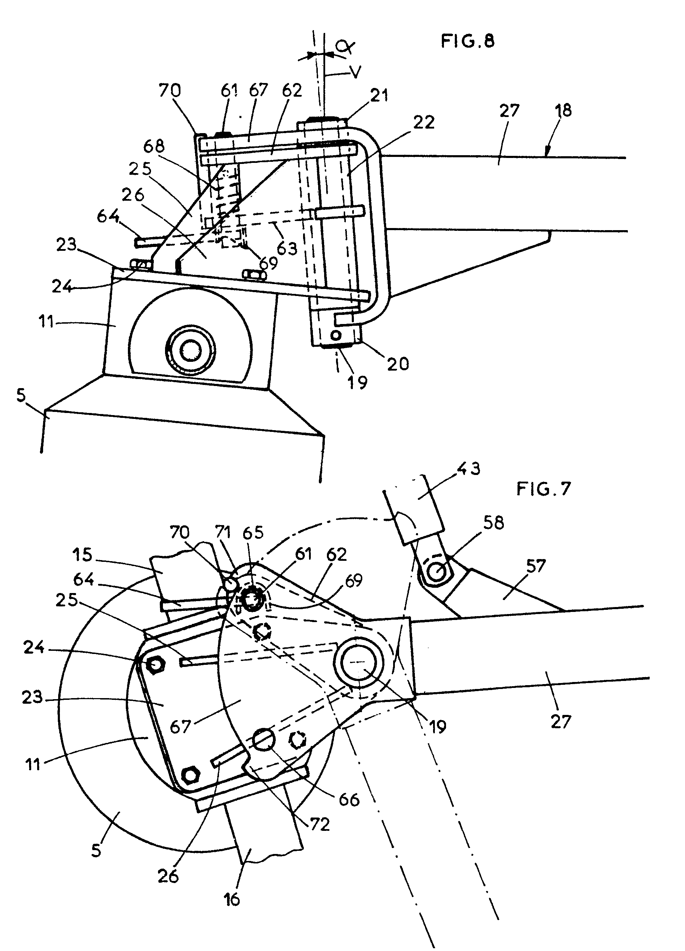

Comme cela ressort clairement des figures 7 et 8, ce timon (18) est articulé au châssis (7) par l'intermédiaire d'un axe (19). Celui-ci est logé dans deux douilles (20 et 21) solidaires du timon (18) et un tube (22) solidaire d'une plaque (23) fixée au carter (11) du châssis (7) au moyen de vis (24). La liaison entre le tube (22) et la plaque (23) est renforcée au moyen de deux plaques verticales (25 et 26).

Le timon (18) se compose de deux parties (27 et 28) articulées l'une par rapport à l'autre au moyen d'un axe (30). Ellas sont en sus reliées par une manivelle filetée (31). Celle-ci permet de modifier la position relative entre les deux parties (27 et 28). La partie (28) comporte à son extrémité avant une chape d'accrochage (29).

Chaque tambour (2 à 6) est guidé en rotation sur un axe support central non représenté. Les extrémités supérieures de ces axes sont fixées dans les carters (8 à 12) du châssis (7) tandis que leurs extrémités inférieures portent une roulette ou un galet (32) permettant à la machine de se déplacer sur le sol durant le travail. Chacun de ces tambours (2 à 6) porte à sa partie inférieure une jupe souple (33 à 37) qui ramasse et déplace sur sa face supérieure les végétaux couchés sur le sol. Sur les parois de ces tambours peuvent être prévus, d'une manière connue en soi, des entraîneurs favorisant ledit déplacement.

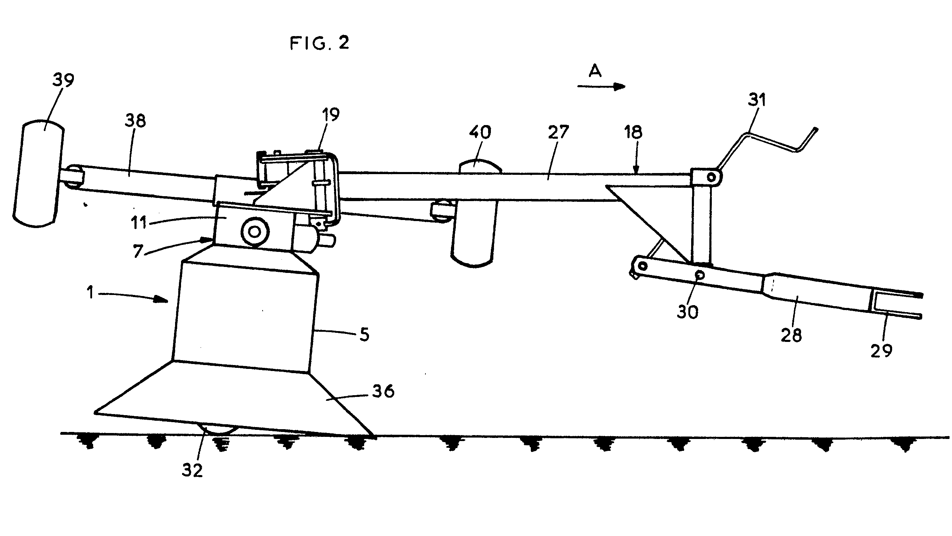

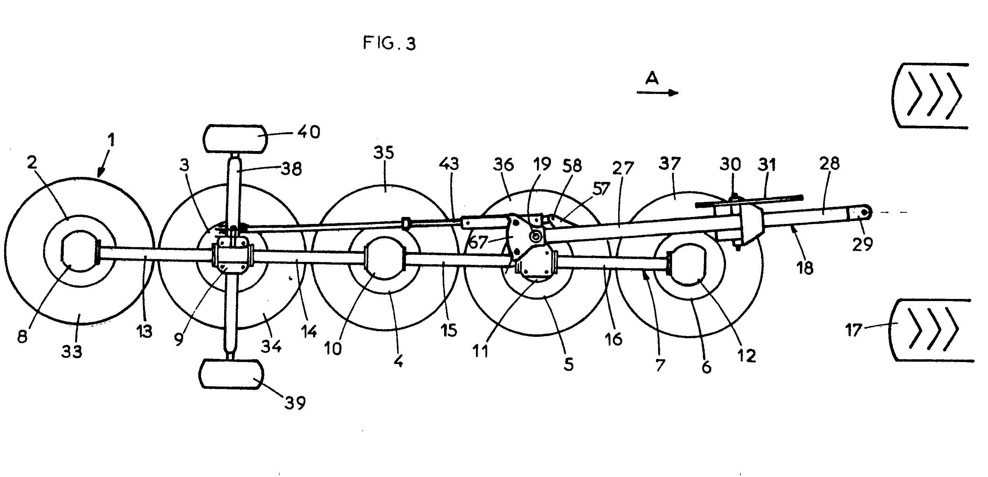

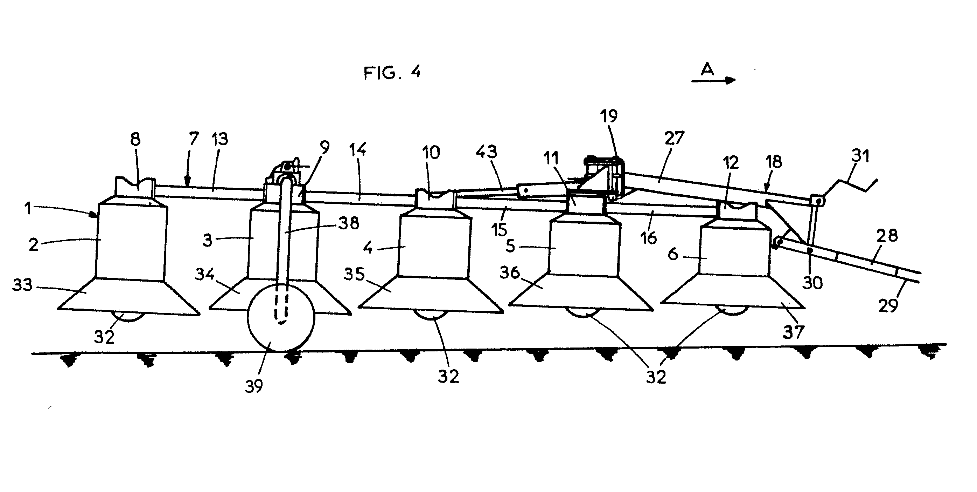

Comme cela est représenté sur la figure 1, pour le travail, le châssis (7) est disposé transversalement par rapport au sens d'avancement indiqué par la flèche (A). Les tambours (2 à 6) sont entraînés dans le sens des flèches (F) autour de leurs axes supports, d'une manière connue en soi, à partir de l'arbre de prise de force du tracteur. Cette rotation des tambours (2 à 6) est assurée au moyen d'un arbre logé dans le châssis (7), lequel arbre est muni de pignons qui engrènent avec des couronnes solidaires desdits tambours. Ces pignons et couronnes sont logés dans les carters (8 à 12). Par ailleurs, les tambours (2 à 6) sont légèrement inclinés vers l'avant afin d'assurer un bon contact des jupes (33 à 37) avec le sol, dans la partie avant de leurs trajectoires. Cette inclinaison est réglable au moyen de la manivelle filetée (31). Les végétaux ramassés sont alors déplacés d'un tambour à l'autre en vue de la formation d'un andain latéral. Conformément à l'invention, un support escamotable (38) muni de roues (39 et 40) est relié au châssis (7). Ces roues (39 et 40) sont sensiblement parallèles au châssis (7) et sont placées de part et d'autre de ce dernier et des tambours (2 à 6). Le support (38) est guidé en rotation dans un palier (41) fixé au carter (9) du châssis (7). Cette fixation est réalisée par des vis (42). Les roues (39 et 40) peuvent être déplacées en hauteur au moyen du support (38). Ce déplacement permet de soulever le châssis (7) avec les tambours (2 à 6) en vue du transport (figures 3 et 4) ou de dégager les roues (39 et 40) vers le haut pour le travail (figures 1 et 2). Dans cette position de travail, les roues (39 et 40) se situent sensiblement au niveau du châssis (7). Elles ne gênent ainsi pas le déplacement des végétaux. Grâce à l'orientation précitée de ces roues (39 et 40) par rapport au châssis (7), elles sont immédiatement positionnées pour le transport en long lorsqu'elles sont abaissées.

Le support (38) a sensiblement la forme d'un U renversé passant par-dessus le châssis (7). Les roues (39 et 40) peuvent ainsi avoir une voie très importante, c'est-à-dire nettement supérieure à la trajectoire des jupes (33 à 37), ce qui confère une bonne stabilité à la machine au transport.

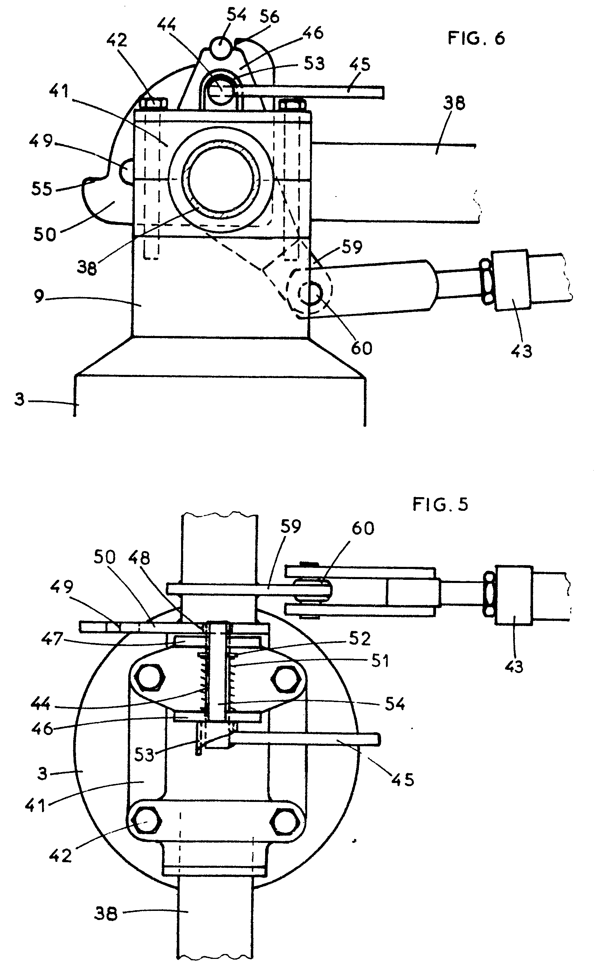

Ledit déplacement en hauteur des roues (39 et 40) s'effectue par pivotement du support (38) d'un angle d'environ 90° au moyen d'un vérin hydraulique (43). Ce support (38) peut être arrêté dans la position de travail ou dans la position de transport au moyen d'un dispositif de verrouillage représenté en détail sur les figures 5 et 6. Ce dispositif comporte un verrou (44) muni d'une poignée (45). Il est guidé dans deux pattes (46 et 47) solidaires du châssis (7) et peut s'engager dans deux trous (48 et 49) d'un secteur (50) solidaire du support (38). Ces trous (48 et 49) correspondent l'un à la position de travail et l'autre à la position de transport. Ils sont amenés en face du verrou (44) par suite du pivotement du support (38). Le verrou (44) est poussé dans les trous (48 et 49) par un ressort (51) qui l'entoure sur une partie de sa longueur et s'appuie d'un côté sur la patte (46) et de l'autre côté sur une rondelle-butée (53) liée audit verrou. La patte (46) est munie d'une rampe (53) qui permet de retirer le verrou des trous (48 et 49) en le faisant tourner sur lui-même. Cette rampe (53) permet aussi de le maintenir en position déverrouillée.

Les deux pattes (46 et 47) comportent en sus un arrêt (54) qui limite le pivotement du support (38) dès que la position de travail ou la position de transport est atteinte. Pour cela le secteur (50) comporte deux butées (55 et 56) qui bloquent le support (38) dès qu'elles entrent en contact avec ledit arrêt (54).

Dans la position de transport qui est représentée sur les figures 3 et 4, le châssis (7) se situe sensiblement dans le prolongement du tracteur (17). Cette position est obtenue par pivotement du châssis (7) autour de l'axe d'articulation (19) avec le timon (18). Ledit axe (19) est légèrement incliné vers l'arrière vu dans le sens d'avancement A. Il forme un angle ($\alpha$) d'environ 10 à 15° par rapport à la verticale (V). En raison de cette inclinaison la partie avant du châssis (7) s'élève et les tambours (2 à 6) se redressent en pivotant de la position de travail dans la position de transport. Ainsi, la distance par rapport au sol des jupes (33 à 37) et des galets ou roulettes (32) est suffisante pour éviter que ces organes ne touchent le sol au transport. La machine repose alors intégralement sur les roues (39 et 40) du support (38) et le tracteur (17) par l'intermédiaire du timon (18). Il est entendu que le timon (18) reste accroché au tracteur lors de ces manœuvres.

Selon une importante caractéristique de l'invention, le vérin hydraulique (43) déplace simultanément le châssis (7) autour de son axe d'articulation (19) avec le timon (18) et le support (38) avec les roues (39 et 40) par rapport audit châssis. Ce vérin est à double action de manière à pouvoir exercer une poussée sur le châssis (7) et le support (38) lors de la transposition dans la position de transport et une traction sur ces mêmes organes lors de la transposition en position de travail. Dans l'exemple représenté sur les figures 1 à 8, ledit vérin hydraulique est articulé sur une patte (57) solidaire du timon (18) au moyen d'un axe (58) et sur une patte (59) solidaire du support (38) au moyen d'une rotule (60). Cette rotule (60) permet le déplacement en hauteur du châssis (7) ainsi que le redressement des tambours (2 à 6) lors du pivotement en position de transport. Le vérin hydraulique (43) peut être actionné à partir de la prise hydraulique du tracteur (17).

Le châssis (7) peut être bloqué par rapport au timon (18), dans chacun des positions précitées, au moyen d'un verrou (61) (voir figures 7 et 8). Celui-ci est guidé dans deux plaques parallèles (62 et 63) reliées au tube (22) solidaire de la plaque (23) qui est fixée au châssis (7). Il comporte une poignée (64) et peut être engagé dans deux trous (65 et 66) d'un secteur (67) solidaire du timon (18). Ces trous (65 et 66) correspondent l'un à la position de travail (position représentée en traits forts sur la figure 7) et l'autre à la position de transport (position représentée en traits mixtes sur cette figure 7). Chaque trou (65 et 66) se place en face du verrou (61) lorsque le châssis (7) est amené dans la position qu'il occupe par rapport au timon (18) au travail ou au transport. Le verrou (61) est maintenu en position de verrouillage au moyen d'un ressort (68). Celui-ci entoure le verrou et exerce une pression en direction des trous (65 ou 66). La plaque (63) comporte une rampe (69) qui facilite le retrait du verrou (61) des trous (65 et 66). Ce retrait est obtenu en faisant tourner le verrou (61) sur lui-même afin de faire glisser sa poignée (64) sur cette rampe (69). Cette rampe (69) permet aussi de maintenir le verrou (61) en position déverrouillée.

Les deux plaques (62 et 63) précitées comportent un arrêt (70) permettant de limiter la rotation du châssis (7) par rapport au timon (18). Pour cela, le secteur (67) comporte deux butées (71 et 72) contre lesquelles s'immobilise l'arrêt (70) lorsque la position désirée est atteinte. Le verrou (61) peut alors être engagé dans le trou (65 ou 66) correspondant du secteur (67). Pour amener le verrou (61) dans la position de blocage, il suffit de le faire tourner sur lui-même afin de faire descendre la rampe (69) à la poignée (64).

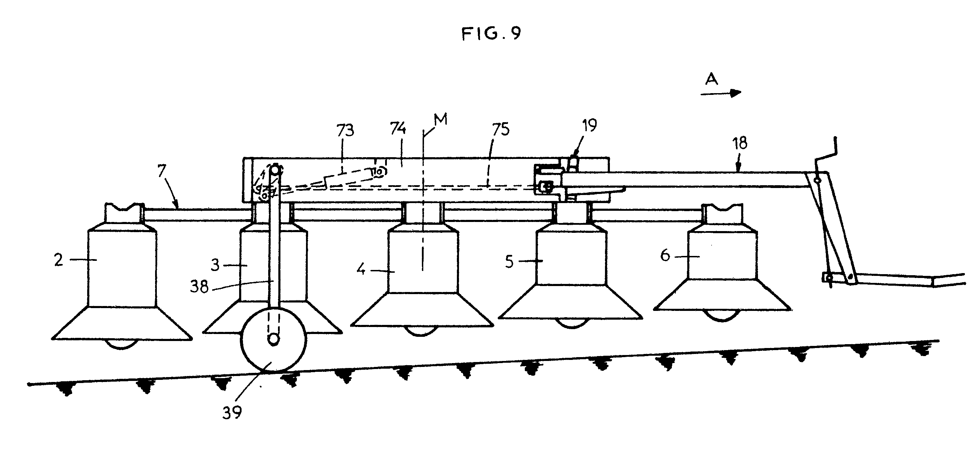

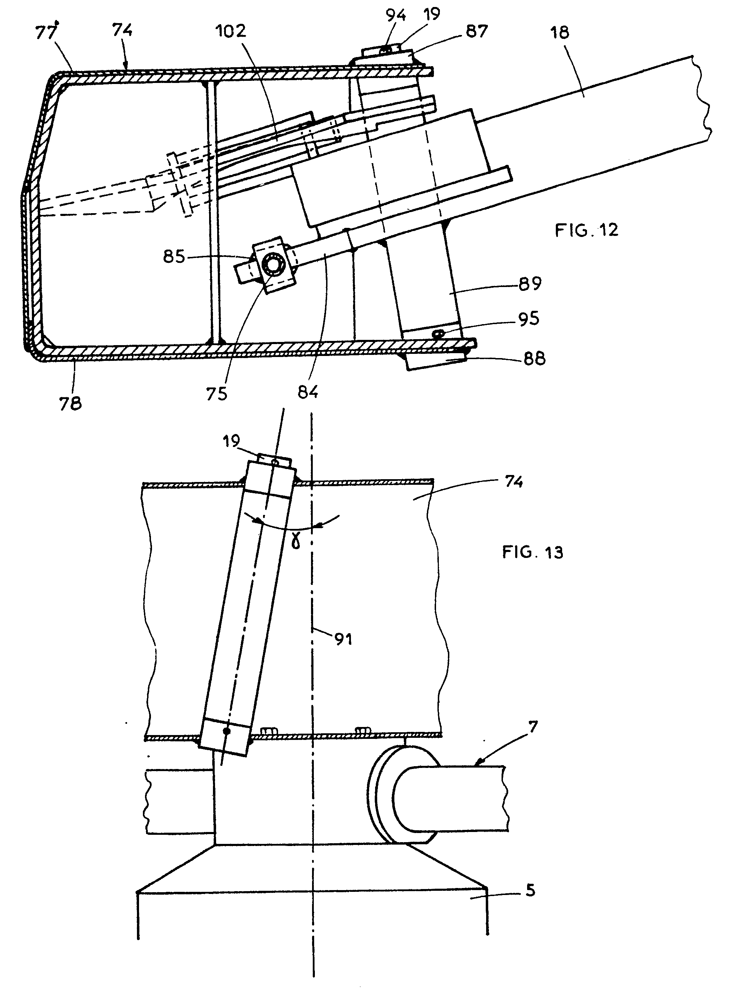

Dans la description ci-après de l'exemple de réalisation selon les figures 9 à 13, les pièces communes avec l'exemple décrit précédemment sont désignées par les mêmes repères.

Dans cet exemple un vérin hydraulique à double effet (73) est relié au support (38) des roues (39 et 40) et à une poutre (74) sensiblement parallèle au châssis (7). Ledit support (38) ainsi que le timon (18) sont articulés sur cette poutre (74). De plus, le support (38) des roues (39 et 40) est relié au timon (18) au moyen d'une tringle (75). Ainsi, lorsqu'on actionne le vérin (73) celui-ci fait pivoter le support (38) des roues (39 et 40) pour amener ces dernières dans la position de travail ou bien dans la position de transport. Ledit pivotement du support (38) provoque immédiatement la rotation du châssis (7) avec la poutre (74) autour de l'axe d'articulation (19) avec le timon (18) et l'amène ainsi également dans la position de travail ou bien dans la position de transport.

Grâce à cet agencement, il n'y a pratiquement pas d'efforts qui s'exercent sur le châssis (7) lorsqu'on passe d'une position dans l'autre. De plus, on peut utiliser un vérin (73) nettement plus court que dans l'exemple précédent. Enfin, la poutre (74) assure une rigidification du châssis (7).

Ladite poutre (74) est disposée au-dessus du châssis (7) et est reliée à ce dernier au moyen de vis (76). Il ressort de la figure 9 qu'elle est disposée pratiquement symétriquement par rapport à un plan médian (M) du châssis (7). Elle est réalisée en deux parties (77 et 78) qui sont assemblées soit par soudure, soit au moyen de boulons. L'intérieur de la poutre (74) est creux. Le vérin hydraulique (73) et la tringle (75) sont avantageusement logés dans ladite poutre. Celle-ci assure ainsi leur protection contre les chocs, les enroulements de fourrage, les poussières et la pluie.

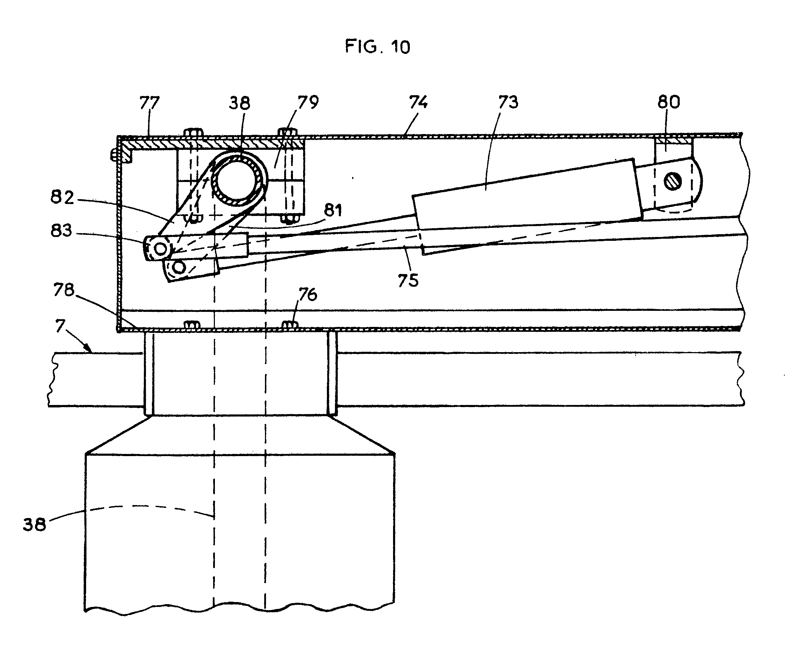

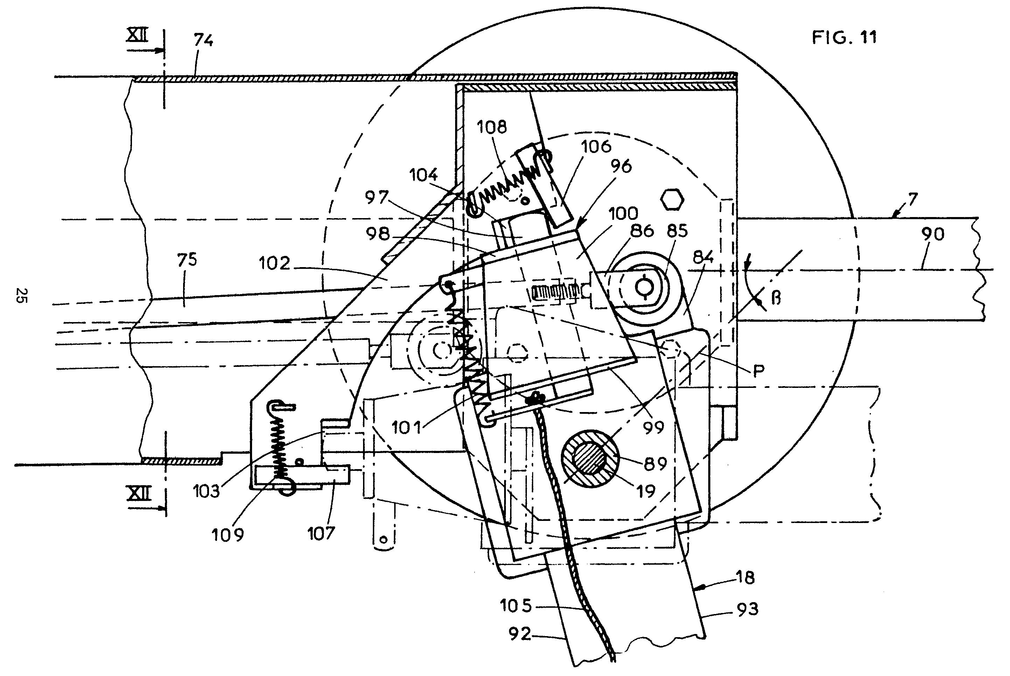

Sur la figure 10, on voit que le support (38) des roues (39 et 40) est logé dans des paliers (79) fixés à la poutre (74). L'une des extrémités du vérin hydraulique (73) est reliée à une chape (80) solidaire de la poutre (74) tandis que son autre extrémité est reliée à une patte (81) solidaire du support (38). La tringle (75) est liée à une seconde patte (82) du support (38) au moyen d'une rotule (83). Son autre extrémité reliée à une plaque (84) solidaire de la partie arrière du timon (18), au moyen d'une rotule (85) (voir figure 11). Cette extrémité de la tringle (75) est constituée par une chape (86) qui est cissée sur l'autre partie de ladite tringle. Ceci permet d'ajuster la longueur de la tringle (75) en fonction de la support (38) des roues (39 et 40).

Le timon (18) est articulé sur la poutre au moyen d'un axe (19). Cet axe (19) est guidé dans deux douilles (87 et 88) soudées sur la poutre (74) et passe dans un fourreau (89) solidaire du timon (18). Ce montage ressort clairement des figures 11 à 13. Cet axe (19) est par ailleurs incliné dans un plan (P) formant un angle ($\beta$) d'environ 45° avec l'axe longitudinal (90) de la poutre (74). Dans ce plan (P), l'axe (19) forme un angle ($\gamma$) d'environ 11° par rapport à un axe géométrique (91) qui est parallèle aux axes de rotation non représentés des tambours (2 à 6) (voir fig. 13). Cette inclinaison permet de faire varier la distance par rapport au sol des tambours (2 à 6) et aussi leur inclinaison, lorsqu'on passe de la position de travail dans la position de transport, ou vice versa, tout en ayant les flancs (92 et 93) du timon (18) pratiquement verticaux dans chacune desdites positions. L'axe d'articulation (19) est positionné au moyen de goupilles (94 et 95).

Cet exemple de réalisation ne nécessite qu'un seul dispositif de verrouillage (96) pour arrêter à la fois le support (38) des roues (39 et 40) et, le châssis (7) avec la poutre (74) par rapport au timon (18), dans la position de travail ou dans la position de transport. Ce dispositif se compose d'un verrou (97) qui peut coulisser longitudinalement dans deux supports (98 et 99) solidaires du timon (18) et reliés entre eux au moyen d'une plaque (100). Il est maintenu dans la position de verrouillage par un ressort (101). Dans la poutre (74) est prévu un secteur (102) muni de deux encoches (103 et 104) dans lesquelles s'enclenche ledit verrou et dont l'une correspond à la position de travail (position représentée en traits continus sur la figure 11) et l'autre à la position de transport (position représentée en traits mixtes sur cette figure 11).

Pour passer d'une position dans l'autre il faut retirer le verrou (97) de l'encoche (103 ou 104) dans laquelle il se trouve, en le tirant à l'encontre de la force du ressort (101). Cette traction peut avantageusement s'effectuer à partir du tracteur d'entraînement au moyen d'un câble (105). Dès que le verrou (97) est dégagé de l'encoche (103 ou 104) une butée (106 ou 107) articulée sur le secteur (102) se place contre son extrémité avant sous l'action d'un ressort (108 ou 109). Cette butée (106 ou 107) empêche son retour immédiat dans l'encoche (103 ou 104). Il suffit alors d'actionner le vérin hydraulique (73) pour modifier la position de la machine. Dans la nouvelle position, le verrou (97) dégage latéralement la butée (106 ou 107) au moyen de son flanc et s'engage automatiquement dans l'encoche (103 ou 104) qui correspond à la nouvelle position de la machine.

Il est bien évident qu'on pourra apporter aux exemples de réalisation décrits ci-dessus divers perfectionnements, modifications ou additions ou remplacer certains éléments par des éléments équivalents sans pour autant sortir du cadre de la présente invention, telle que définie dans les revendications.

**Revendications**

1. Machine de fenaison comportant notamment un châssis (7) portant plusieurs rotors (1) placés côte à côte et déplaçant des végétaux se trouvant sur le sol, un timon (18) qui est articulé autour d'un axe (19) par rapport audit châssis (7) et qui sert pour l'accouplement à un tracteur et, un support escamotable (38) relié au châssis (7) et muni de roues (39 et 40) qui portent la machine dans la position de transport et qui sont dégagées du sol dans la position de travail, caractérisée par le fait que pour passer de la position de transport à la position de travail de la machine et vice versa, elle comporte un vérin hydraulique (43, 73) relié au support escamotable (38) et au timon (18), lequel vérin hydraulique (43, 73) déplace simultanément le châssis (7) autour de l'axe (19) d'articulation avec le timon (18) et le support escamotable (38) avec les roues (39 et 40) par rapport audit châssis (7).

2. Machine selon la revendication 1, caractérisée par le fait que le support (38) et les roues (39 et 40) peuvent pivoter d'un angle d'environ 90°.

3. Machine selon la revendication 1 ou 2, caractérisée par le fait que le support (38) des roues (39 et 40) a sensiblement la forme d'un U renversé.

4. Machine selon la revendication 3, caractérisée par le fait que le support (38) passe par-dessus le châssis (7).

5. Machine selon la revendication 1 ou 2, caractérisée par le fait que le déplacement du support (38) et des roues (39 et 40) est limité au moyen de butées (55 et 56) et d'un arrêt (54).

6. Machine selon la revendication 1, caractérisée par le fait que l'axe d'articulation (19) du châssis (7) avec le timon (18) est incliné par rapport au sens d'avancement (A).

7. Machine selon la revendication 1, caractérisée par le fait que le vérin (43) est articulé au timon (18) et au support (38) des roues (39 et 40).

8. Machine selon la revendication 1 ou 7, caractérisée par le fait que le vérin (43) comporte au moins une rotule (60).

9. Machine selon la revendication 1, caractérisée par le fait que le déplacement du châssis (7) par rapport au timon (18) est limité au moyen de butées (71 et 72) et d'un arrêt (70).

10. Machine selon la revendication 1, caractérisée par le fait qu'elle comporte un verrou (61) pour bloquer le châssis (7) par rapport au timon (18) et, un verrou (44) pour bloquer le support (38) par rapport au châssis (7) dans la position de travail ou dans la position de transport.

11. Machine selon l'une quelconque des revendications 1 à 6, caractérisée par le fait que le vérin hydraulique (73) est relié au support (38) des roues (39 et 40) et à une poutre (74) sensiblement parallèle au châssis (7).

12. Machine selon la revendication 11, caractérisée par le fait que le support (38) et le timon (18) sont articulés sur la poutre (74).

13. Machine selon la revendication 11 ou 12, caractérisée par le fait que le support (38) des roues (39 et 40) est relié au timon (18) au moyen d'une tringle (75).

14. Machine selon la revendication 11, caractérisée par le fait que la poutre (74) est disposée au-dessus du châssis (7) et est reliée à ce dernier au moyen de vis (76).

15. Machine selon la revendication 14, caractérisée par le fait que la poutre (74) est disposée pratiquement symétriquement par rapport à un plan médian (M) du châssis (7).

16. Machine selon l'une quelconque des revendications 11 à 15, caractérisée par le fait que la poutre (74) est creuse.

17. Machine selon l'une quelconque des revendications 11 à 16, caractérisée par le fait que la poutre (74) est réalisée en deux parties (77 et 78).

18. Machine selon la revendication 16, caractérisée par le fait que le vérin hydraulique (73) et la tringle (75) sont logés dans la poutre (74).

19. Machine selon la revendication 13, caractérisée par le fait que la longueur de la tringle (75) est réglable.

20. Machine selon la revendication 13, caractérisée par le fait que la tringle (75) comporte une rotule (83 et 85) à chacune de ses extrémités.

21. Machine selon la revendication 12, caractérisée par le fait que l'axe d'articulation (19) entre le timon (18) et la poutre (74) est incliné d'un angle ($\gamma$) par rapport à un axe géométrique (91) parallèle aux axes de rotation des tambours (2 à 6), dans un plan (P) formant un angle ($\beta$) avec l'axe longitudinal (90) de la poutre (74).

22. Machine selon l'une quelconque des revendications 11 à 21, caractérisée par le fait qu'elle comporte un seul dispositif de verrouillage (96) pour arrêter à la fois le support escamotable (38) et le châssis (7) par rapport au timon (18), dans la position de travail ou dans la position de transport.

23. Machine selon la revendication 22, caractérisée par le fait que le dispositif de verrouillage (96) comporte un verrou (97) qui est relié au timon (18) et un secteur muni de deux encoches (103 et 104), qui est solidaire de la poutre (74).

24. Machine selon la revendication 23, caractérisée par le fait que le verrou (97) peut être manœuvré à partir du tracteur d'entraînement au moyen d'un câble (105).

**Patentansprüche**

1. Heuwerbungsmaschine mit besonders einem Rahmen (7), der mehrere Rotoren (1) trägt, die nebeneinander angeordnet sind und Pflanzen, die sich auf dem Boden befinden versetzen, einer Deichsel (18), die durch eine Achse (19) am Rahmen (7) angelenkt ist und zum Ankuppeln an einem Schlepper dient, und einem verstellbaren Träger (38), der mit dem Rahmen (7) verbunden ist und mit Rädern (39 und 40) versehen ist, die die Maschine in der Transportstellung tragen und in der Arbeitsstellung vom Boden entfernt sind, dadurch gekennzeichnet, dass sie zum Umstellen von der Transportstellung in die Arbeitsstellung und umgekehrt einen Hydrozylinder (43, 73) besitzt, der mit dem verstellbaren Träger (38) und mit der Deichsel (18) verbunden ist, wobei dieser Hydrozylinder (43, 73) gleichzeitig den Rahmen (7) um die Gelenkachse (19) mit der Deichsel (18) und dem verstellbaren Träger (38) mit den Rädern (39 und 40) in bezug auf den Rahmen (7) versetzt.

2. Maschine nach Anspruch 1, dadurch gekennzeichnet, dass der Träger (38) und die Räder (39 und 40) in einem Winkel von etwa 90° schwenkbar sind.

3. Maschine nach Anspruch 1 oder 2, dadurch gekennzeichnet, dass der Träger (38) der Räder (39 und 40) nahezu die Form eines umgekehrten U hat.

4. Maschine nach Anspruch 3, dadurch gekennzeichnet, dass der Träger (38) über den Rahmen (7) geht.

5. Maschine nach Anspruch 1 oder 2, dadurch gekennzeichnet, dass die Versetzung des Trägers (38) und der Räder (39 und 40) durch Anschläge (55 und 56) und einen Sperrstift (54) begrenzt ist.

6. Maschine nach Anspruch 1, dadurch gekennzeichnet, dass die Gelenkachse (19) des Rahmens (7) mit der Deichsel (18) in bezug auf die Fahrtrichtung (A) geneigt ist.

7. Maschine nach Anspruch 1, dadurch gekennzeichnet, dass der Hydrozylinder (43) an der Deichsel (18) und an dem Träger (38) der Räder (39 und 40) angelenkt ist.

8. Maschine nach Anspruch 1 oder 7, dadurch gekennzeichnet, dass der Hydrozylinder (43) mindestens ein Kugelgelenk (60) aufweist.

9. Maschine nach Anspruch 1, dadurch gekennzeichnet, dass die Versetzung des Rahmens (7) in bezug auf die Deichsel (18) durch Anschläge (71 und 72) und einen Sperrstift (70) begrenzt ist.

10. Maschine nach Anspruch 1, dadurch gekennzeichnet, dass sie einen Riegel (61) zum Blockieren des Rahmens (7) in bezug auf die Deichsel (18) und einen Riegel (44) zum Blockieren des Trägers (38) in bezug auf den Rahmen (7) in der Arbeitsstellung oder in der Transportstellung aufweist.

11. Maschine nach irgendeinem der Ansprüche 1 bis 6, dadurch gekennzeichnet, dass der Hydrozylinder (73) mit dem Träger (38) der Räder (39 und 40) und mit einem Balken (74) verbunden ist, der nahezu parallel zum Rahmen (7) ausgerichtet ist.

12. Maschine nach Anspruch 11, dadurch gekennzeichnet, dass der Träger (38) und die Deichsel (18) an dem Balken (74) angelenkt sind.

13. Maschine nach Anspruch 11 oder 12, dadurch gekennzeichnet, dass der Träger (38) der Räder (39 und 40) mittels einer Stange (75) mit der Deichsel (18) verbunden ist.

14. Maschine nach Anspruch 11, dadurch gekennzeichnet, dass der Balken (74) oberhalb des Rahmens (7) angeordnet ist und mit diesem durch Schrauben (76) verbunden ist.

15. Maschine nach Anspruch 14, dadurch gekennzeichnet, dass der Balken (74) symmetrisch in bezug auf eine Mittelebene (M) des Rahmens (7) angeordnet ist.

16. Maschine nach irgendeinem der Ansprüche 11 bis 15, dadurch gekennzeichnet, dass der Balken (74) hohl ist.

17. Maschine nach irgendeinem der Ansprüche 11 bis 16, dadurch gekennzeichnet, dass der Balken (74) aus zwei Teilen (77 und 78) besteht.

18. Maschine nach Anspruch 16, dadurch gekennzeichnet, dass der Hydrozylinder (73) und die Stange (75) in dem Balken (74) liegen.

19. Maschine nach Anspruch 13, dadurch gekennzeichnet, dass die Länge der Stange (75) einstellbar ist.

20. Maschine nach Anspruch 13, dadurch gekennzeichnet, dass die Stange (75) an jedem seiner Enden ein Kugelgelenk (83 und 85) besitzt.

21. Maschine nach Anspruch 12, dadurch gekennzeichnet, dass die Gelenkachse (19) zwischen der Deichsel (18) und dem Balken (74) so geneigt ist, dass die einen Winkel ($\gamma$) bildet mit einer geometrischen Achse (91), die parallel zu den Drehachsen der Trommeln (2 bis 6) ist, und zwar in einer Ebene (P), die einen Winkel ($\beta$) mit der Längsachse (90) des Balkens (74) bildet.

22. Maschine nach irgendeinem der Ansprüche 11 bis 21, dadurch gekennzeichnet, dass sie eine einzige Verriegelungsvorrichtung (96) zum Feststellen zugleich des verstellbaren Trägers (38) und des Rahmens (7) in bezug auf die Deichsel (18, in der Arbeitsstellung oder in der Transportstellung.

23. Maschine nach Anspruch 22, dadurch gekennzeichnet, dass die Verriegelungsvorrichtung (96) ein Riegel (97) aufweist, der an der Deichsel (18) angeordnet ist und einen Sektor mit zwei Einschnitten (103 und 104) aufweist, welcher Sektor an dem Balken (74) angebracht ist.

24. Maschine nach Anspruch 23, dadurch gekennzeichnet, dass der Riegel (97) vom Antriebsschlepper aus mittels eines Seils (105) betätigt werden kann.

## Claims

1. A haymaking machine including in particular a frame (7) carrying a number of rotors (1) placed side by side and moving vegetable matter lying on the ground, a pole (18) which is articulated about an axis (19) with respect to the said frame (7) and which serves for coupling to a tractor, and a retractable support (38) connected to the frame (7) and equipped with wheels (39 and 40) which carry the machine in the position for transport and which are disengaged from the ground in the working position, characterized by the fact that for passing from the position for transport to the working position of the machine and vice versa it includes a hydraulic jack (43, 73) connected to the retractable support (38) and to the pole (18), the said hydraulic jack (43, 73) simultaneously displacing the frame (7) about the axis (19) of articulation to the pole (18) and the retractable support (38) with the wheels (39 and 40) with respect to the said frame (7).

2. A machine as in claim 1, characterized by the fact that the support (38) and the wheels (39 and 40) can pivot through an angle of about 90°.

3. A machine as in claim 1 or 2, characterized by the fact that the support (38) for the wheels (39 and 40) has substantially the shape of an inverted U.

4. A machine as in claim 3, characterized by the fact that the support (38) passes over the top of the frame (7).

5. A machine as in claim 1 or 2, characterized by the fact that the displacement of the support (38) and of the wheels (39 and 40) is limited by means of stops (55 and 56) and a catch (54).

6. A machine as in claim 1, characterized by the fact that the axis of articulation (19) of the frame (7) to the pole (18) is inclined with respect to the direction of advance (A).

7. A machine as in claim 1, characterized by the fact that the jack (43) is articulated to the pole (18) and to the support (38) for the wheels (39 and 40).

8. A machine as in claim 1 or 7, characterized by the fact that the jack (43) includes at least one ball-and-socket joint (60).

9. A machine as in claim 1, characterized by the fact that the displacement of the frame (7) with respect to the pole (18) ist limited by means of stops (71 and 72) and a catch (70).

10. A machine as in claim 1, characterized by the fact that it includes a bolt (61) for locking the frame (7) with respect to the pole (18) and a bolt (44) for locking the support (38) with respect to the frame (7) in the working position or in the position for transport.

11. A machine as in any one of the claims 1 to 6, characterized by the fact that the hydraulic jack (73) is connected to the support (38) for the wheels (39 and 40) and to a beam (74) substantially parallel with the frame (7).

12. A machine as in claim 11, characterized by the fact that the support (38) and the pole (18) are articulated onto the beam (74).

13. A machine as in claim 11 or 12, characterized by the fact that the support (38) for the wheels (39 and 40) is connected to the pole (18) by means of a rod (75).

14. A machine as in claim 11, characterized by the fact that the beam (74) is arranged above the frame (7) and is connected to the latter by means of screws (76).

15. A machine as in claim 14, characterized by the fact that the beam (74) is arranged practically symmetrically with respect to a central plane (M) of the frame (7).

16. A machine as in any one of the claims 11 to 15, characterized by the fact that the beam (74) is hollow.

17. A machine as in any one of the claims 11 to 16, characterized by the fact that the beam (74) is made in two portions (77 and 78).

18. A machine as in claim 16, characterized by the fact that the hydraulic jack (73) and the rod (75) are housed in the beam (74).

19. A machine as in claim 13, characterized by the fact that the length of the rod (75) is adjustable.

20. A machine as in claim 13, characterized by the fact that the rod (75) includes a ball-and-socket joint (83 and 85) at each end of it.

21. A machine as in claim 12, characterized by the fact that the axis of articulation (19) between the pole (18) and the beam (74) is inclined at an angle ($\gamma$) with respect to a geometric axis (91) parallel with the axes of rotation of the drums (2 to 6), in a plane (P) making an angle ($\beta$) with the longitudinal axis (90) of the beam (74).

22. A machine as in any one of the claims 11 to 21, characterized by the fact that it includes only one locking device (96) for stopping both the retractable support (38) and the frame (7) with respect to the pole (18) in the working position or in the position for transport.

23. A machine as in claim 22, characterized by the fact that the locking device (96) includes a bolt (97) which is connected to the pole (18) and a sector which is equipped with two notches (103 and 104) and is integral with the beam (74).

24. A machine as in claim 23, characterized by the fact that the bolt (97) may be manipulated from the towing tractor by means of a rope (105).

FIG. 1

0 131 530

FIG. 2

A →

39 38 19 40 27 18 31

11

7

1

5

36

32

30 28 29

FIG. 3

FIG. 4

FIG. 6

FIG. 5

FIG.8

FIG.7

FIG. 9

FIG. 10

0 131 530

FIG. 11

0 131 530

FIG. 12

FIG. 13